# EUROPEAN PATENT SPECIFICATION

(11) **EP 2 056 316 B1**
(45) Date of publication and mention of the grant of the patent: **29.09.2010**
(21) Application number: 07791096.6
(22) Date of filing: 20.07.2007
(51) Int. Cl.: H01H 13/14, H01H 11/00, H01H 13/702

(54) **MEMBER FOR PUSH BUTTON SWITCH AND METHOD OF PRODUCING THE SAME**
GLIED FÜR EINEN DRUCKSCHALTER UND HERSTELLUNGSVERFAHREN DAFÜR
ÉLÉMENT D'INTERRUPTEUR À BOUTON POUSSOIR ET SON PROCÉDÉ DE FABRICATION

(30) Priority: 02.08.2006 JP 2006210948
(43) Date of publication of application: 06.05.2009
(73) Proprietor: Shin-Etsu Polymer Co., Ltd., Tokyo 103-0023 (JP)
(72) Inventor: KATO, Katsuhiko, Chuo-ku Tokyo 1030023 (JP); TANEYAMA, Hideto, Chuo-ku Tokyo 1030023 (JP); UCHIYAMA, Hitoshi, Chuo-ku Tokyo 1030023 (JP)
(74) Representative: Schäfer, Matthias W.
(86) International application number: PCT/JP2007/064359
(87) International publication number: WO 2008/015925

(56) References cited:
- EP-A- 1 484 778
- WO-A-2005/079120
- WO-A-2005/109460
- WO-A1-2005/098884
- JP-A- 2004 227 867

## Description

The present invention relates to a push-button switch member preferably used in an electronic device and the like, and a method of manufacturing the same.

### [Background of Art]

Recently, an electronic device such as a mobile phone, a personal digital assistants (PDA) device is required to reduce the size and thickness. Hence, a push-button switch member used in a unit of operating an electronic device is also required to reduce the size and thickness. In accordance with this trend, a metal frame, which is thinner and stiffer than a resin frame, can be applied to such push-button switch member since the distance between the upper surface and the lower surface of the component is extremely reduced.

Because it is necessary to be high stiffness even if it becomes thinner, for example, a push-button switch member used in an electronic device and the like is manufactured by the following method. First, a transparent hole and/or a cutoff are formed within a surface of a hard base made of a stiff plate such as a hard resin plate, a metal plate or the like. Next, a pad member made of a rubber or a thermoplastic elastomer is filled into the transparent hole and /or the cutoff, then a key pad which integrally comprises a pushing part and a floating part is formed. Then, a key top is placed on a surface opposing to pushing part of the pad member with an adhesive layer so as to complete a push-button switch member (for example, see a patent document 1.)

Further, a push-button switch member manufactured by the following method is well known. First, a hard resin is molded to form a reinforced member by injection molding and the like and a metal layer is formed in a position contacting an elastic member of the reinforced member. Next, a silicone rubber as an elastic member is injected and molded after the reinforced member including the metal layer is moved to the inside of a cavity of a mold. Accordingly a base sheet is obtained by integrally molding the elastic member and the reinforced member. Next, a key top is fixed to the base sheet with an adhesive so as to form a push-button switch member (see a patent document 2.)
[Patent Document 1]
   W002004/112069 (Claims)
[Patent Document 2]
   2005-190849A (Claims)

### [Disclosure of the Invention]

### [Problem to Be Solved]

The above conventional push-button switch member, however, has the following issues. The patent document 1 discloses the push-button switch member in which a pad member including a floating part, which fixes a key top, is mainly made of silicone rubber, or only thermal plastic elastomer. If the pad is made of only silicone rubber and the thickness of the floating part is extremely thin (under 0.2mm for example), the floating part is damaged at the time when the key top of the pushing button is mistakenly pulled. On the other hand, if the pad is made of only thermal plastic elasotmer having high strength, for example only urethane elastomer, it's possible to reduce the thickness of key pad. However, in case of using thermal plastic elasotmer, usually, it is formed by injection- molding. Because the flowablilty of thermal plastic elasotmer is inferior to that of a liquid silicone rubber, it is a disadvantage that dimensional stability is worse and yield is also inferior. Further, there is the other disadvantage for the elastomer that tactile feeling by clicking the push-button is inferior after repeating pushing the push-button for a long time because a key pad is deformed due to a pushing pressure.

Further, the push-button switch member disclosed in the patent document 2 has similar disadvantages shown in the push-button switch member disclosed in the patent document 1. For this reason, it is difficult to thin a push-button switch member. Further, when a base sheet is manufactured, a reinforced member having a metal layer molded in advance is placed within the inside of a cavity of a mold, and then, it has to be molded again. Such process needs long time and makes a manufacturing method complicated, increasing a manufacturing cost and reducing the productivity.

The EP 1 484 778 A discloses a key sheet equipped with a keytop exposed through an operational opening with no partition frame formed in the casing of an apparatus. Thereby, the keytop is adapted to be depressed into the casing, and a base sheet to which the keytop is firmly attached, enabling reduction in the thickness of the base sheet. In this key sheet, the base sheet is equipped with a pedestal portion to which the keytop is firmly attached and a frame-like support portion supporting the pedestal portion so as to allow its displacement, wherein a clearance portion allowing the keytop to avoid press contact with the frame-like support portion at the time of depressing operation, is formed in the outer edge side portion of the bottom portion of the keytop opposed to the frame-like support portion.

The WO 2005/109460 A relates to a rubber keypad having a hard resin or metallic reinforcing plate introduced into a key unit for ensuring profile stability. Thereby a frame supporting a key group arranged on the key operating surface of a key unit surrounds the key group and is formed by machining the outer edge part of a hard resin or metallic reinforcing plate. The supporting frame is fitted in an opening provided in the housing of a mobile apparatus and fix the key unit. A part of the reinforcing plate including the supporting frame is exposed to the outside and the exposed part is decorated so that a functional design element is provided.

The WO 2005/079120 A relates to an EL sheet realizing reduction of EL device troubles, such as lighting failure and stable light emission for a prolonged period of time; and to a relevant member for lighting press-button switch. An EL laminated sheet comprises a counter electrode layer, a dielectric layer, a light emitter layer and a transparent electrode layer. A conductive polymer is used in the transparent electrode layer, and an highly adherent adhesive layer is interposed between the transparent electrode layer and the light emitter layer.Thereby, a second dielectric layer and/or second counter electrode layer is interposed for preventing any ion diffusion.

In order to overcome the above issues, the present invention is to provide a push-button switch member, which is thinner, superior in tactile feeling by clicking with high durability and produced with low cost, and a method of manufacturing the same with a low manufacturing cost.

### [Means to Solve the Problem]

According to an aspect of the present invention, a push-button switch member comprises; at least one key top: a metal sheet including a hole corresponding to at least a position where the key top is placed: an elastic sheet being placed on one side of the metal sheet where the key top is placed or the other side opposing to the one side, and that is inserted into the hole and contacted with the key top at the position of the hole. The elastic sheet has a structure in which a urethane film and a silicone rubber are laminated toward the direction of the thickness of the metal sheet.

The push-button switch member of the aspect has an advantage that the thickness of it can be thinner than that of the conventional member, which has been considered to be the thinnest, and the durability of it can be enhanced. So, because the urethane film and the silicone rubber are integrally laminated to be the elastic sheet, it is possible to make the member much thinner, and maintain both sufficient durability and flexibility for tactile feeling by clicking. Further, the metal sheet is used as a reinforced member, enhancing the total stiffness of the push-button switch member with maintaining a thin structure.

According to an aspect of the present invention, in the push-button switch member, the elastic sheet may be filled into a space between the key tops adjacently located each other, so that the filled part of the elastic sheet may form a partitioning bridge. This structure can decorate the part of the partitioning bridge formed in the space between the key tops adjacently located each other. As a result, the partitioning bridge can reinforce the push-button switch member as well as improving visibility and it arrows the variety of decoration of the member.

In the push-button switch member of the aspect of the present invention, an additional decorative layer is formed between the urethane film and the silicone rubber. Forming the additional decorative layer between the urethane film and the silicone rubber can improve the visibility and decorative ability of the push-button switch member as well as the present invention above. As a result, the above structure in the aspect can respond various requests for designing as well as reducing the thickness and improving the durability of it.

Further, one of the aspect of the push-button switch member in the present invention is, that an additional decorative frame may be formed around the periphery of the key top region on the metal sheet or the elastic sheet. Hence, this structure can improve the visibility and decorative ability of the push-button switch member as well as the decorative frame can enhance the reinforcement of the component. As a result, this structure can attain a beautiful sight and high quality as well as providing variety of designing a push-button switch member.

According to an aspect of the present invention, in the push-button switch member, a light emitting element may be placed below the key top. Hence, this structure can attain high brilliant and uniformly emitted light as well as thinning the push-button switch member. As a result, this structure can provide a component for a light- emitted push-button switch member with a light- emitting function for improving visibility of the key top in the dark area.

In the push-button switch member of the aspect of the present invention, a part of the periphery of the metal sheet may be folded toward the direction opposing to the key top. Hence, the push-button switch member can be easily assembled into an electronic device, increasing applicability of the member of the present invention into a wider field.

According to other aspect of the present invention, a push-button switch member comprises: at least one key top: a metal sheet including a hole corresponding to at least a position where the key top is placed: an elastic sheet being placed on one side of the metal sheet where the key top is placed on the metal sheet or the other side opposing to the one side, and that is inserted into the hole and contacted with the key top at the hole position. The elastic sheet has a structure in which a polycarbonate film and a silicone rubber are laminated toward the direction of the thickness of the metal sheet.

In the push-button switch member of the other aspect of the present invention, the elastic sheet may be filled into the space between the key tops adjacently located each other, so that the filled part of the elastic sheet may be form a partitioning bridge. Hence, additional decoration can be added to the part of the partitioning bridge formed in the space between the key tops adjacently located each other. As a result, not only visibility and decorative ability of the push-button switch member is improved, but also the effect of reinforcing by the partitioning bridge can be expected.

In the other aspect of the push-button switch member of the present invention, an additional decorative layer may be formed between the polycarbonate film and the silicone rubber.

Further, in the push-button switch member of the other aspect of the present invention, an additional decorative frame may be formed around the periphery of the key top region on the metal sheet or the elastic sheet.

In the push-button switch member of the other aspect of the present invention, a light emitting element may be placed below the key top.

According to the push-button switch member, the other aspect of the present invention is, that a part of the periphery of the metal sheet may be folded toward the direction opposing to the key top.

Accordingly, if the urethane film is replaced with the polycarbonate film, the other aspect of the present invention has the same effects and advantages similar to the aspect of the present invention.

According to another aspect of the present invention, a method of manufacturing a push-button switch member comprises: attaching a urethane film to a metal sheet; forming a hole in the position of the metal sheet corresponding to at least one key top, the hole being penetrated through the metal sheet; molding a silicone rubber on the side where the urethane film is attached and inserting an elastic sheet composed of the urethane film and the silicone rubber into the hole; and attaching the key top to the elastic sheet in the position of the hole.

By adopting the method of the present invention, it can be easy to manufacture a cover member for push- button switch, which is durable for long- term usage with much thinner structure, and it can be manufactured with a low cost. The aspect of the present invention includes: forming the hole in the metal sheet at a position of corresponding to at least one key top, the hole being penetrated through the metal sheet; molding the silicone rubber on the side where the urethane film is attached and inserting the elastic sheet composed of the urethane film and the silicone rubber into the hole. Hence, the yet other aspect can integrally form the metal sheet and the elastic sheet. By this method, the push-button switch member become further thinner, as well as it maintains sufficient durability and flexibility for tactile feeling by clicking. Here, when the hole is formed in the metal sheet, the urethane film may be attached to the metal sheet and then, the metal sheet may be etched or punched out from a surface opposing to the surface where the urethane film is attached. Otherwise, after the hole is formed in the metal sheet, the urethane film may be attached to one surface of the metal sheet.

According to the other aspect of the present invention, a method of manufacturing a push-button switch member comprises: forming a hole in the position of the metal sheet corresponding to at least one key top, the hole being penetrated through the metal sheet; placing a urethane film on the metal sheet; supplying a liquid silicone rubber to the surface of the urethane film; molding a structure where the metal sheet, the urethane film and the liquid silicone rubber are laminated in this order and inserting a elastic sheet composed of the urethane film and the silicone rubber into the hole of the metal sheet ; and attaching a key top to the elastic sheet in the position of the hole.

By adopting the method of manufacturing above, it makes easy to manufacture a cover member for push- button switch, which is durable for long time usage and is superior in a thin structure, with a low manufacturing cost. This method forms the hole in the position corresponding to at least one key top, the hole being penetrated through the metal sheet , molds the structure where the metal sheet, the urethane film and the liquid silicone rubber are laminated in this order, and then inserts the elastic sheet into the hole. Hence, the method can integrally mold the metal sheet and the elastic sheet. Accordingly, this method can obtain the push-button switch member, which is able to reduce the thickness much more, with maintaining sufficient durability and flexibility for a tactile feeling by clicking.

According to the other aspect of the present invention, a method of manufacturing a push-button switch member comprises: forming a hole in the metal sheet corresponding to at least one key top, and the hole being penetrated through the metal sheet; supplying a liquid silicone rubber to the surface of the urethane film; forming an elastic sheet by molding the liquid silicone rubber on the surface of the urethane film and laminating the liquid silicone rubber and the urethane film , the elastic sheet including a convex portion in the position corresponding to the hole; attaching the elastic sheet to the metal sheet with fitting the convex portion into the hole; and attaching a key top to the elastic sheet in the position of the hole

By adopting the other aspect of the present invention, it makes easy to manufacture a cover member for push- button switch, which durable for long- term usage and superior in a thinned structure, with a low manufacturing cost. The method of other aspect of the present invention includes forming a hole in the position of the metal sheet corresponding to at least one key top, the hole being penetrated through the metal sheet, forming an elastic sheet by molding the liquid silicone rubber on the surface of the urethane film and laminating the liquid silicone rubber and the urethane film, the elastic sheet including a convex portion at the position corresponding to the hole, and attaching a key top to the elastic sheet in the position of the hole. The method makes it possible to combine the metal sheet with elastic sheet integrally and obtain a push-button switch member, which is able to reduce the thickness more, with sufficient durability and flexibility for a tactile feeling by clicking.

According to the other aspect of the present invention, a method of manufacturing a push-button switch member comprises: attaching a polycarbonate film to a metal sheet; forming a hole in the position of the metal sheet corresponding to at least one key top, the hole being penetrated through the metal sheet; molding the silicone rubber on the side where the polycarbonate film is attached and inserting an elastic sheet composed of the polycarbonate film and the silicone rubber into the hole; attaching the key top to the elastic sheet in the position of the hole.

According to other aspect of the present invention, a method of manufacturing a push-button switch member comprises: forming a hole in the metal sheet in a position corresponding to at least one key top, the hole being penetrated through the metal sheet; placing a polycarbonate film on the surface of the metal sheet; supplying a liquid silicone rubber to the surface of the polycarbonate film; molding a structure where the metal sheet, the urethane film and the liquid silicone rubber are laminated in this order and inserting an elastic sheet composed of the polycarbonate film and the silicone rubber into the hole of the metal sheet; and attaching a key top to the elastic sheet in the position of the hole.

According to other aspect of the present invention, a method of manufacturing a push-button switch member comprises: forming a hole in the metal sheet in a position corresponding to at least one key top, the hole being penetrated through the metal sheet; supplying a liquid silicone rubber to the surface of the polycarbonate film; forming an elastic sheet by molding the liquid silicone rubber existed on the surface of the polycarbonate film and laminating the liquid silicone rubber and the polycarbonate film, the elastic sheet including a concave portion in the position corresponding to the hole; attaching the elastic sheet to the metal sheet with fitting the convex portion into the hole; and attaching the key top to the elastic sheet in the position of the hole.

Accordingly, if the urethane film is replaced with the polycarbonate film, these aspects of the present invention regarding methods of manufacturing a push-button switch member receive the same effects and advantages similar to aspects of methods of manufacturing a push-button switch member in which the urethane film is used.

A material for the key top constituting push-button switch member regarding the present invention is not limited in particular to one of any particular kinds, components, elasticity and color tones may preferably be well- known polymer resins such as thermal hardened resins. The specific example of material for the key top is, such as, polycarbonate resin, acrylonitrile- butadiene -stylen resin (ABS resin), epoxy resin, phenol resin, acrylic resin, urethane resin, silicone resin, polyvinyl chloride resin, polystyrene resin, polyarylate resin, polymethylpentene resin, polyurethane resin, polyethylene resin, polypropylene resin, polyphenyleneether resin, polyacetal resin, polysulfone resin, polyetherimide resin and the like. In further particular, polycarbonate resin or ABS resin is preferably selected among these resins because they are superior in transparency, easiness in molding, surface condition and easiness in decorative processing. A polycarbonate resin is yet further preferable. But, the above resin materials are nothing more than some examples and other resin materials may be used. In addition, not only one kind of the resin materials described above used as the resin material, but also mixture of two or more kinds of them may be used as the resin material. Further, metal materials may be used for a key top constituting a component of a push-button switch in the present invention. For example, such a metal as stainless steel, aluminum, magnesium, copper, zinc, titanium, alloy of them, or the like may preferably used. In particular, stainless steel may preferably used.

A material for a metal sheet constituting a push-button switch member may be selected from stainless steel, aluminum, magnesium, copper, zinc, titanium, alloy of them, or the like. In particular, stainless steel may be preferably used because of high corrosion resistivity and ease of manufacturing. But, the above metal materials described above are nothing more than some examples and other metal materials may be used.

In the present invention, molding means a process for forming a specific configuration, regardless of the pressure intensity. Attaching means not only integrating objects to be attached together with an adhesive or a double faced tape placed between the objects, but also integrating objects to be attached together without placing anything between the objects. A polycarbonate film means not only a 100% polycarbonate film but also a polymer alloy film including such as combination of polyester (more preferably, polybutylene terephthalate) with polycarbonate.

### [Advantage of the Invention]

The present invention is to provide a push-button switch member, which is thinner, superior in tactile feeling by clicking with high durability and produced with low cost, and a method of manufacturing the same with a low manufacturing cost.

### [Brief Description of Drawings]

[Fig. 1]

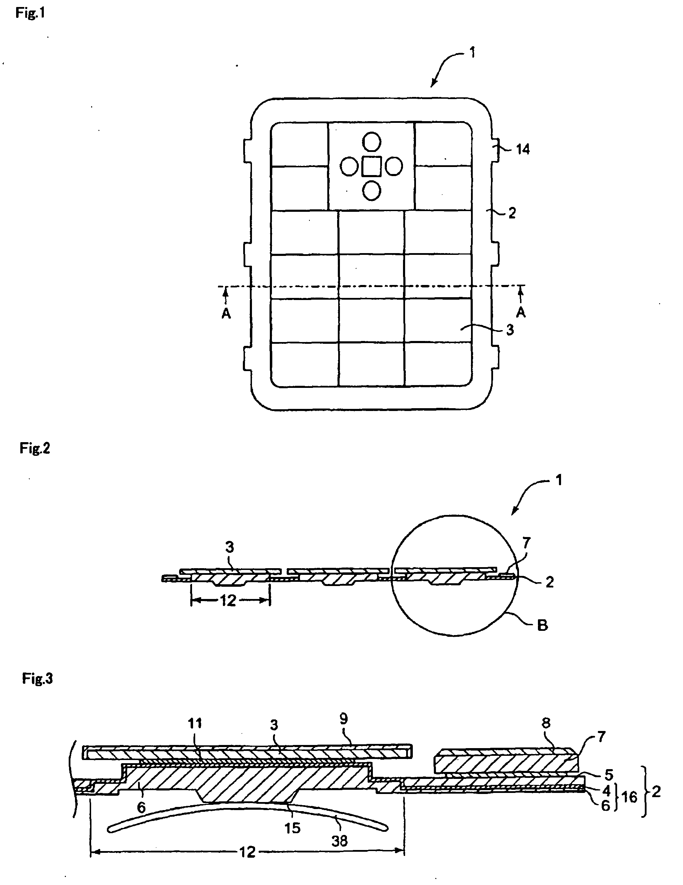

   Fig.1 is a plane view of a push-button switch member regarding a first embodiment of the present invention.
[Fig. 2]
   Fig.2 is a cross sectional view along an A-A line regarding the push-button switch member shown in Fig.1.
[Fig. 3]
   Fig.3 is an enlarged view of a part B of the push-button switch member shown in Fig.2.
[Fig. 4]

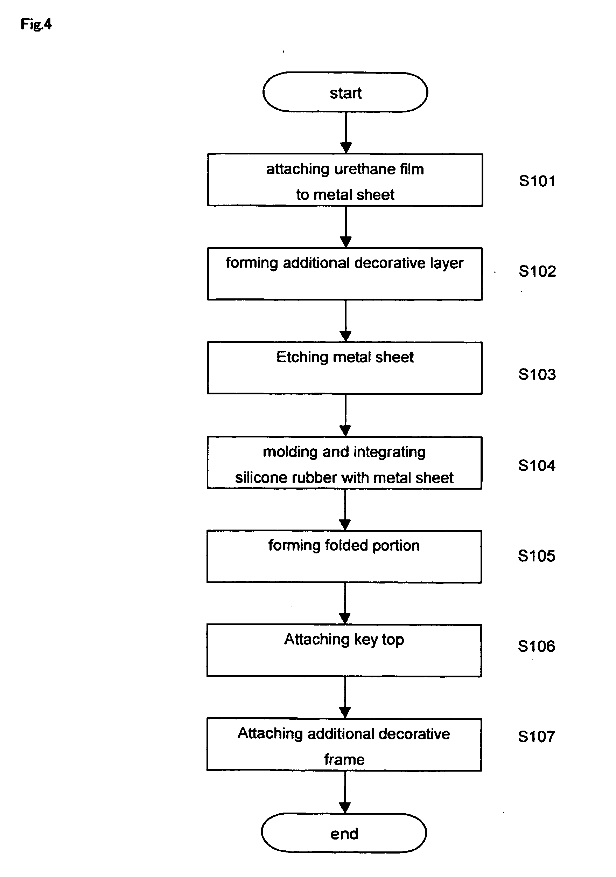

   Fig.4 is a flow chart of manufacturing processes of the push-button switch member regarding the first embodiment of the present invention.
[Fig. 5]

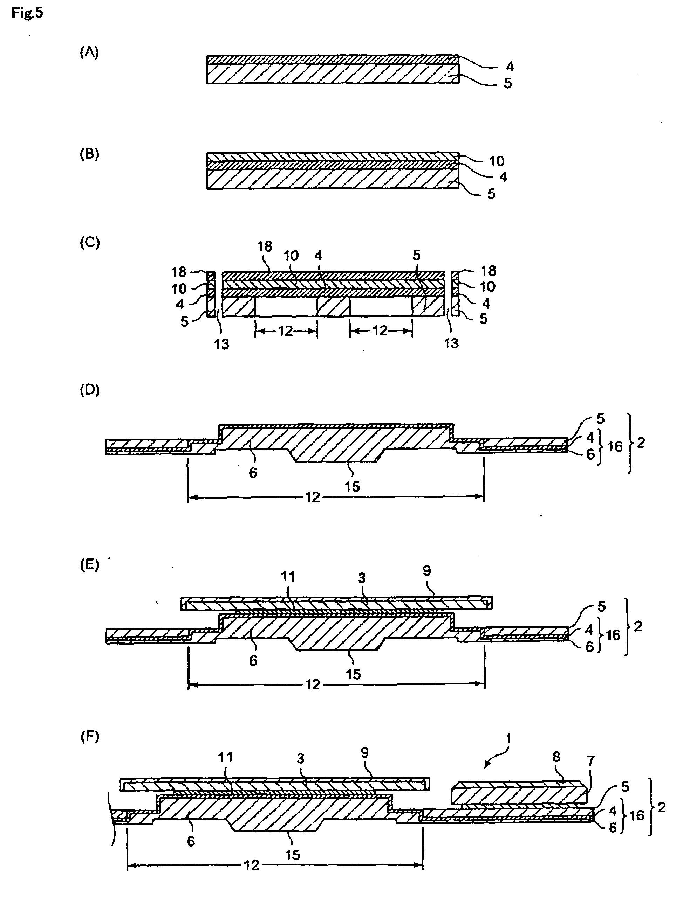

   Figs.5 (A) to (F) are cross sectional views in accordance with steps of manufacturing the push-button switch member regarding the first embodiment of the present invention.
[Fig. 6]

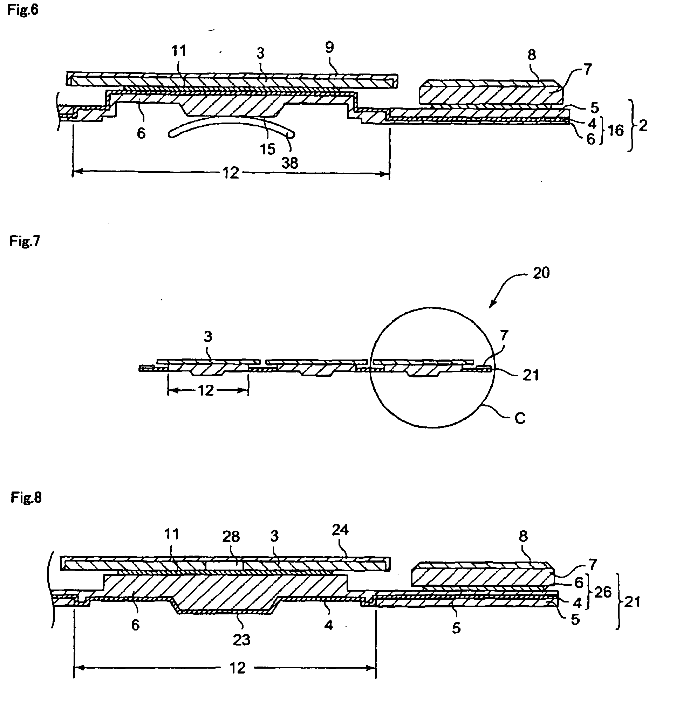

   Fig.6 is a cross sectional view of a modification of the push-button switch member shown in Fig.3.
[Fig. 7]
   Fig.7 is a cross sectional view along a line similar to the A-A line shown in Fig.1 regarding the push-button switch member in a second embodiment of the present invention.
[Fig. 8]
   Fig.8 is an enlarged view of a part C of the push-button switch member shown in Fig.7.
[Fig. 9]

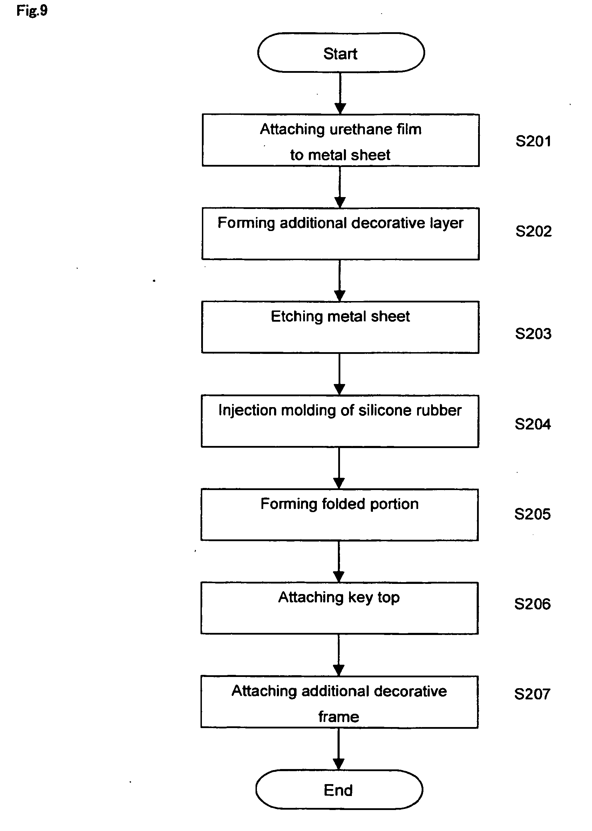

   Fig.9 is a flow chart of manufacturing processes of a push-button switch member regarding the second embodiment of the present invention.
[Fig. 10]

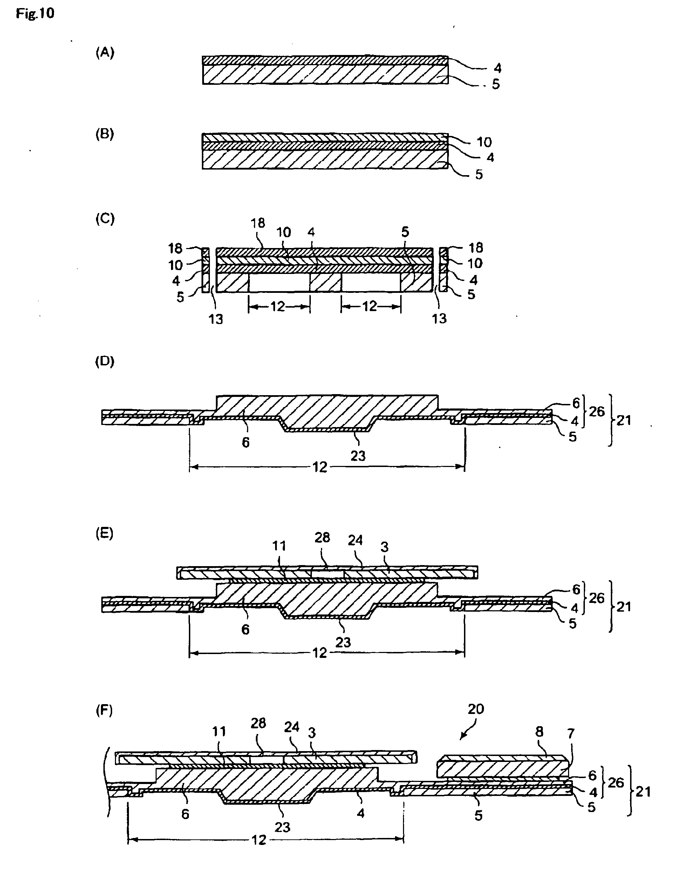

   Figs.10 (A) to (F) are cross sectional views in steps of manufacturing the push-button switch member regarding the second embodiment of the present invention.
[Fig. 11]

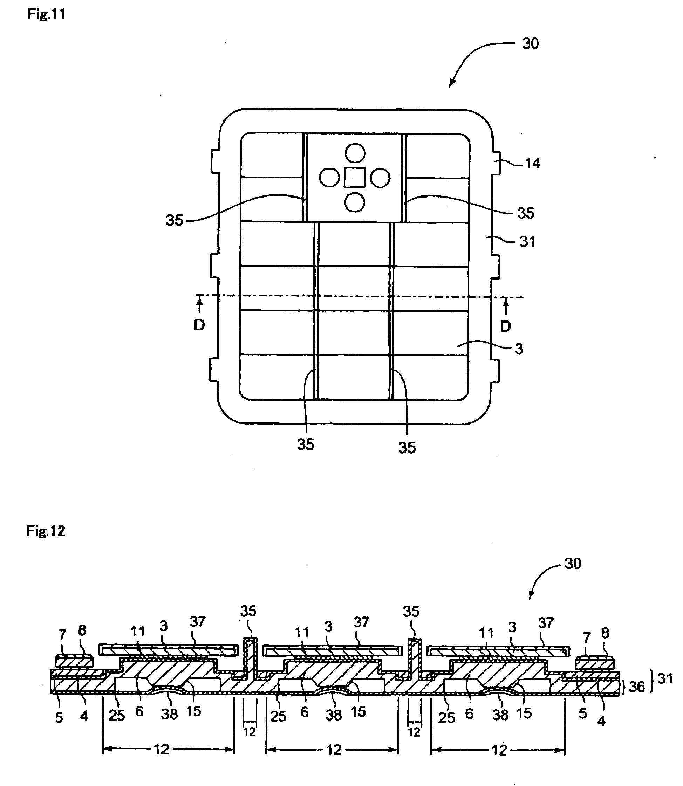

   Fig.11 is a plane view of a push-button switch member regarding a third embodiment of the present invention.
[Fig. 12]
   Fig.12 is an enlarged view of a cross sectional view along a line D-D shown in Fig.11 regarding the push-button switch member.
[Fig. 13]

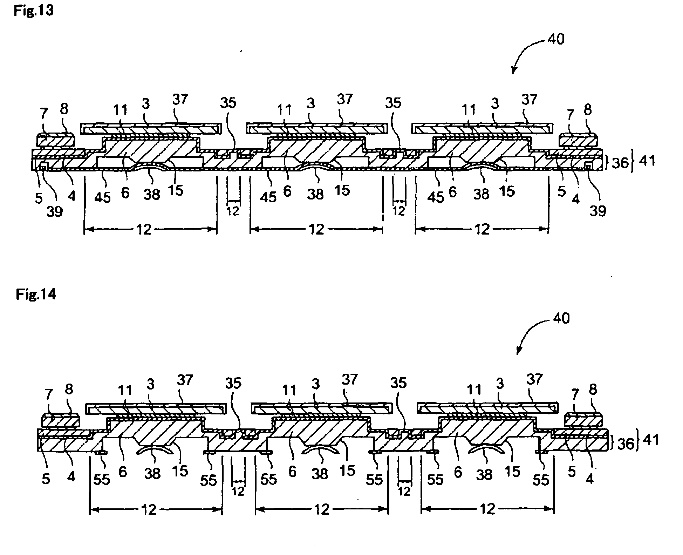

   Fig.13 is a cross sectional view along a line similar to the D-D line shown in Fig.11 regarding a push-button switch member in a fourth embodiment of the present invention.
[Fig. 14]
   Fig. 14 is a cross sectional view along a line similar to the D-D line shown in Fig.10 regarding a push-button switch member in a modification of the fourth embodiment of the present invention.
[Fig. 15]

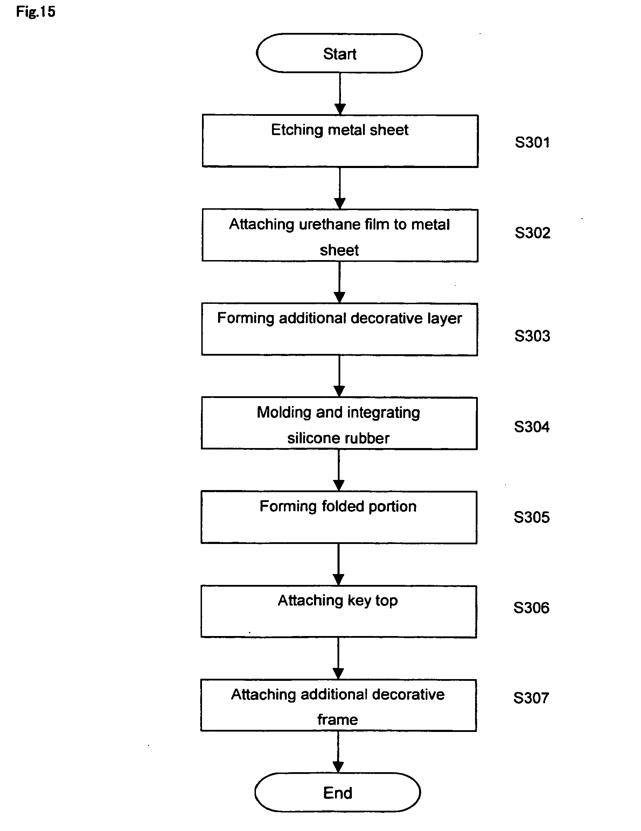

   Fig.15 is a flow chart showing a modification of the manufacturing processes for the push-button switch member regarding the first embodiment of the present invention.
[Fig. 16]

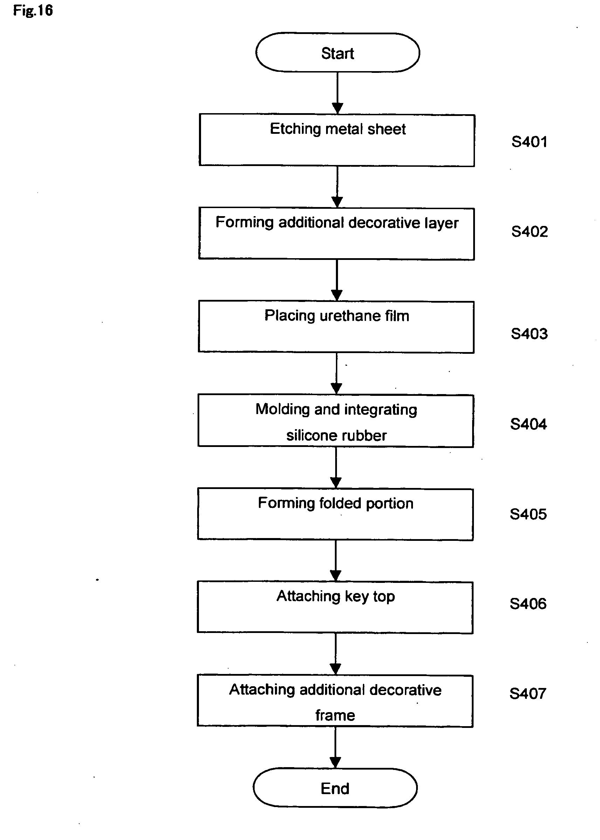

   Fig.16 is a flow chart showing other modification of the manufacturing processes for the push-button switch member regarding the first embodiment of the present invention.
[Fig. 17]

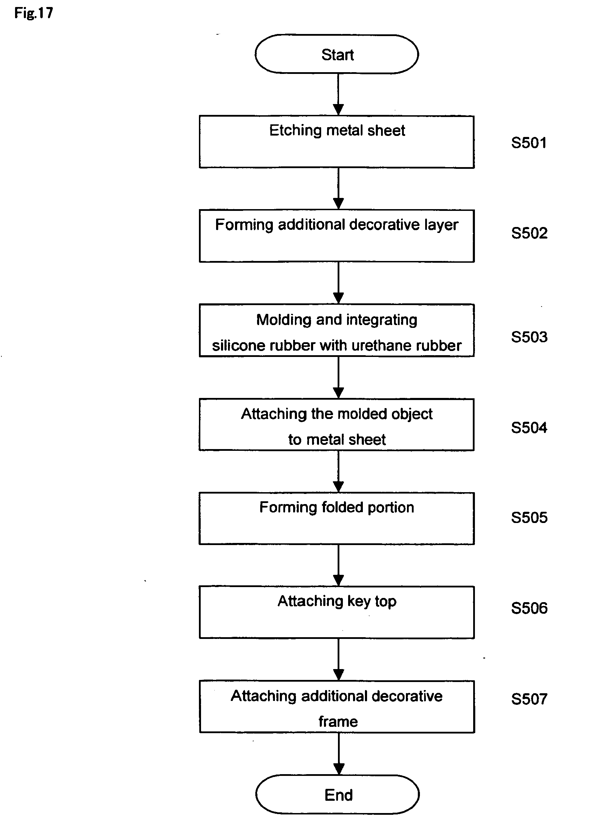

   Fig.17 is a flow chart showing the other modification of the manufacturing processes for the push-button switch member regarding the first embodiment of the present invention.

### [Reference Numerals]

1: push-button switch member,
2: key pad,
3: key top,
4: urethane film,
5: metal sheet,
6: silicone rubber,
7: additional decorative frame,
8: printed layer,
9: decorative layer,
10: additional decorative layer,
11: adhesive layer,
12: hole,
13: hole for positioning,
14: folded portion,
15: presser,
16: elastic sheet,
18: protective film,
20: push-button switch member,
21: key pad
23: presser, .
24: decorative layer,
25: EL sheet,
26: elastic sheet,
28: penetrating hole,
30: push-button switch member,
31: key pad,
35: partitioning bridge,
36: elastic sheet,
37: decorative layer,
38: metal dome,
39: LED,
40: component for push-button switch,
41: key pad,
45: light guiding sheet,
55: long- stripe light guiding sheet,

### [The preferred embodiments of the invention]

Preferred embodiments of the present invention regarding a push-button switch member and a method of manufacturing the same will be explained in details with referring to drawings. But, the present invention is not limited to preferred embodiments described below.

### [First Embodiment]

Fig.1 is a plane view of a push-button switch member 1 regarding a first embodiment of the present invention. Fig.2 is a cross sectional view along an A-A line of the push-button switch member 1 shown in Fig.1. Fig.3 is an enlarged view of the part B of the push-button switch member 1 shown in Fig.2.

As shown in Figs.1 and 2, the push-button switch member 1 comprises a key pad 2, a key top 3 and an additional decorative frame 7. The key top 3 is made of transparent resin and placed on the front surface of the key pad 2. The additional decorative frame 7 is placed in the outside of the region that the key top 3 is placed in the key pad 2. The key top 3 is preferably a member made of a polycarbonate resin. But also, the key top 3 may be made of other material except polycarbonate. For example, the key top 3 may be made of ABS resin. A decorative layer 9 is formed on the front surface of the key top 3, and a decorative layer 9 forming characters, number symbols and/or drawing patterns and so on. A method of manufacturing the decorative layer 9 is not specifically limited, but a well-known method in which an ink or a coating material is formed on the front surface of the key top 3. Here, in order to improve fixing property, adhesiveness and a chromogenic effect of ink, coating material, or the like, well- known surface treatment may be preferably preformed on the front surface of the key top 3 in advance to change the property of the surface. Further, a protective layer made of a transparent resin at the outside of the decorative layer 9 may be formed. Such a protective layer can efficiently protect the decorative layer 9 from any damages.

As shown in Fig.3, a key pad 2 comprises a metal sheet 5, a urethane film 4 and a silicone rubber 6. The metal sheet 5 includes a hole 12. An elastic sheet 16 comprises the urethane film 4 and the silicone rubber 6. If there is a space between pluralities of the key tops 3 adjacently located each other, the metal sheet 5 exposes at the outside of the push-button switch member 1. In order to avoid such exposure, a surface of the metal sheet, opposing the surface to which the urethane film 4 is attached, may be decoratively plated, coated or printed with an additional decorative material or the like. Then, it helps to improve design variation for the push-button switch member 1. A part of the elastic sheet 16 is protruded from the hole 12 of the metal sheet 5 so that the urethane film 4 is placed on a front surface of the sheet. The key top 3 is attached to the protruded part with an adhesive layer 11. A presser 15 is formed on a surface of the silicone rubber 6 within the hole 12, opposing to the key top 3. The presser 15 protrudes from the direction opposing to the key top 3. As a material of the additional decorative frame 7, a polycarbonate resin is preferably used. Other resin except polycarbonate resin may be used. A printed layer 8 forming characters, patterns, and symbols may be formed on the front surface of the additional decorative frame 7. The printed layer 8 is formed by a well -known method such as plating or coating.

Next, processes for manufacturing the push-button switch member 1 regarding a first embodiment in the present invention will be explained.

Fig.4 is a flow chart of manufacturing processes of the push-button switch member 1 regarding the first embodiment of the present invention. Figs.5 are cross sectional views in steps of manufacturing the push-button switch member 1 regarding the first embodiment of the present invention.

First, the urethane film 4 is attached to the metal sheet 5 (step S101). In this embodiment, as shown in Fig.5 (A), after the primer is applied on one surface of the metal sheet 5 constituting the push-button switch member 1, the urethane film 4 is attached to the metal sheet 5 by hot pressing. Otherwise, an adhesive working at normal temperature or by additional heating may be used for integrating the urethane film 4 with the metal sheet 5. In such case, temperature for integrating is preferably from 120 degree C to 150 degree C which is higher than temperature for forming silicone. Otherwise, a double faced tape or an pressure-sensitive adhesive may be used. The thickness of the metal sheet 5 is preferably within a range being equal to or over 0.05 mm or equal to or less than 0.5 mm, more specifically equal to or over 0.1 mm equal to or equal to or less than 0.2 mm. If the thickness of the metal sheet 5 is equal to or over 0.05 mm, stiffness of the push-button switch member 1 as a whole can be assured. If the thickness of the metal sheet 5 is equal to or less than 0.5mm, the push-button switch member 1 can be thinned. The thickness of the urethane film 4 is preferably within a range which is equal to or over 0.03 mm or equal to or less than 0.2mm, more specifically equal to or over 0.05 mm equal to or less than 0.1 mm. If the thickness of the urethane film 4 is equal to or over 0.03 mm, the urethane film 4 can be hardly broken, being caused by drawing the urethane film 4 at the time when molding the silicone rubber 6 with a pressure. If the thickness of the he urethane film 4 is equal to or less 0.2mm, the push-button switch member 1 can be thinned. When the amount of drawing the urethane film 4 becomes large in the following process, the urethane film 4 may be molded with heating by a mold in advance before the silicone rubber 6 is molded. By adopting such a process, because the urethane film 4 stretches uniformly, it is possible to avoid color becoming pale, color cracking, and color shading of the additional decorative printed layer printed on the urethane film 4. Alternatively, by the process above, it is possible to avoid tearing of the urethane film 4 when the silicone rubber is molded in the following process.

Next, as shown in Fig. 5 (B), an additional decorative layer 10 is formed on the surface of the urethane film 4 (step S102). In the embodiment, the additional decorative layer 10 is preferably formed by screen printing with an ink such as urethane, polycarbonate, polybutylene terephthalate or the like on the surface of the urethane film 4. The additional decorative layer 10 is a layer for improving adhesiveness of the urethane film 4 with the silicone rubber 6 as well as improving additional decoration. Here, a material and a forming process for the additional decorative layer 10 is not limited to the described above, but may be another material and another method. Forming the additional decorative layer 10 improves visibility and decorative ability of the push-button switch member 1, responding a demand for variety of design. But, it is not absolutely necessary to form the additional decorative layer 10. A layer composed of an adhesive or a double faced tape may be formed instead of the additional decorative layer 10.

Next, the hole 12 is formed by etching the metal sheet 5 from a surface opposing to the surface to which the urethane film 4 is attached (step S103). As shown in Fig.5 (C), in this embodiment, by etching the portion of the metal sheet 5 corresponding to the region of key top 3 and the region of positioning hole 13, the hole 12 and the positioning hole 13 are preferably formed in the metal sheet 5. Further, the penetrating hole is formed in the urethane film 4 which is left after etching the region of the positioning hole 13. Hence, by forming the penetrating hole, positional accuracy is improved when the key pad 2 is manufactured. However, manufacturing conditions, materials for the metal sheet 5, materials for the urethane film 4 and the like, are not limited to the above cases, but may be modified. For example, etching may be performed after the protective film 18 is attached to the surface of the additional decorative film 10. Then, corrosion of the urethane film 4 can be reduced at the time of etching. The hole 12 of the metal sheet 5 is formed not only by the above method, but another method such as punching if it is necessary.

Next, a liquid silicone rubber with selective adhesion is coated on the surface of the additional decorative layer 10, then pressed and molded with a pressure (step S 104). As shown in Fig.5 (D), in this embodiment, a liquid silicone rubber with selective adhesion is pressed and mold, integrating the metal sheet 5 and the urethane film 4 with the silicone rubber 6 into the key pad 2. More particularly, a liquid silicone rubber with selective adhesion is coated on the surface of the additional decorative layer 10. Then, by using a mold which includes a positioning pin set along the positioning hole 13 and a concave portion being in accordance with a product configuration, uncured liquid silicone rubber can be molded by compression molding. Finally, the elastic sheet 16 having the presser 15 in which the urethane film 4 is integrated with the silicone rubber 6.

Next, the folded portion 14 is formed in the metal sheet 5 (step S105). In the embodiment, plural portions at the periphery of the metal sheet 5 are folded toward the direction of the back surface of the key pad 2. The folded portion 14 shown in Fig .1 is formed by a well- known method such as pressing. Otherwise, the folded portion 14 may be formed by a consecutive step instead of the next step after step 104. For example, it may be formed by a process after the key top 3 is attached (step S106) or the additional decorative frame 7 is attached (step S 107). Forming the folded portion 14 is not absolutely necessary.

Next, the key top 3 is attached to a part of the elastic sheet 16 protruding from the hole 12 (step S106). As shown in Fig.5 (E), in the embodiment, the key top 3 is attached to the surface of the urethane film 4 with the adhesive layer 11 in a position opposing to the presser 15.

Finally, the additional decorative frame 7 is attached to the metal sheet 5 (step S107). As shown in Fig.5 (F), in the embodiment, the additional decorative frame 7, which has been decoratively processed in advance, is attached to the periphery of the key pad 2 being the outside of a region of the key top 3 with a double faced tape. The additional decorative frame 7 is preferably a member made of polycarbonate resin. But, the additional decorative frame 7 may be made of another material except polycarbonate. For example, ABS resin may be used. A method of manufacturing the printed layer 8 is not specifically limited. But, forming the additional decorative frame 7 is not absolutely necessary.

Fig.6 is a cross sectional view of a modification in which the configuration of the push-button switch member 1 is different from that of the push-button switch member 1 shown in Fig.3. As shown in Fig.6, the bottom surface of the end of the presser 15 is placed at the position, which is upper than the lower surface of the elastic sheet 16. By this structure, the total thickness of the key pad 2 is reduced, so a further thinner key pad 2 can be provided. The structure is not limited to this modification, but the bottom surface of the end of the presser 15 may be placed at the position equal to the lower surface of the elastic sheet 16.

### [Second Embodiment]

Next, a push-button switch member 20 for regarding a second embodiment of the present invention will be explained.

The push-button switch member 20 regarding a second embodiment of the present invention includes common portions constituting the push-button switch member 1 regarding the first embodiment of the present invention described above. Here, the same reference numerals in the first embodiment are applied to such common portions in the following second embodiment and explanations of the same manufacturing processes are omitted.

Fig.7 is a cross sectional view along a line similar to the A-A line shown in Fig.1 regarding the push-button switch member 20 in the second embodiment of the present invention. Fig.8 is an enlarged view of a part C of the push-button switch member 20 shown in Fig.7.

In the second embodiment, as shown in Figs.7 and 8, a key pad 21 comprises the metal sheet 5 including the hole 12 and an elastic sheet 26, as being different from the first embodiment. A part of the elastic sheet 26 is protruded from the hole 12 of the metal sheet 5 so that the urethane film 4 is placed on a back surface of the sheet. Such protruded portion is a presser 23. The other protruded portion is formed on surface opposing to the presser 23. The key top 3 made of a metal is attached to the other protruded portion with the adhesive layer 11.

A material for the metal sheet described before can be preferably used as a material for the key top 3. Stainless steel is particularly preferable. Further, a penetrating hole 28 is penetrated through the surface of the key top 3 by one of laser irradiating, pressing, etching and the like. At the same time, a decorative layer 24 showing any functions with patterns such as characters, numbers, pictures or the like may be formed on the surface of the key top 3 by the way of process such as blasting, hairlining or the like. A transparent resin coating layer may be preferably performed in a region including the penetrating hole 28 on the surface of the key top 3. This transparent resin layer is applied in order to pass light from the back side of the key top 3.

Next, method for manufacturing the push-button switch member 20 regarding the second embodiment will be explained.

Fig.9 is a flow chart of manufacturing processes of the push-button switch member 20 regarding the second embodiment of the present invention. Figs.10 are cross sectional views in steps of manufacturing the push-button switch member 20 regarding the second embodiment of the present invention. Steps S201 to S203 shown in Fig.9 and Figs. 10 (A) to 10 (C) are processes similar to steps S101 to S 103 shown in Fig.4 and steps shown in Figs. 5 (A) to 5 (C). Hence, overlapped explanations will be omitted.

First, the urethane film 4 is attached to the metal sheet 5 (step S201). As shown in Fig.10 (A), this step is the process to integrate the urethane film 4 with the metal sheet 5.

Next, as shown in Fig. 10 (B), the additional decorative layer 10 is formed on the surface of the urethane film 4 (step S202). This step is the process to improve adhesiveness of the urethane film 4 with the silicone rubber 6 as well as to improve additional decoration. But, forming the additional decorative layer 10 is not absolutely necessary.

Next, the hole 12 is formed in the metal sheet 5 (step S203). As shown in Fig.10 (C), this step is the process to form the hole 12 by etching the metal sheet 5 from a surface opposing to the surface to which the urethane film 4 is attached.

A silicone rubber with selective adhesion is injected and molded thereafter (step S204). As shown in Fig.10 (D), in the embodiment, a silicone rubber with selective adhesion is injected and molded, preferably integrating the metal sheet 5 and the urethane film 4 with the silicone rubber 6 into the key pad 21. More particularly, the metal sheet 5 integrated with the urethane film 4, which is covered with the additional decorative layer 10, is placed in a mold for injecting and molding. The mold includes a positioning pin set along the positioning hole 13 and a concave portion being in accordance with a product configuration. Next, an uncured liquid silicone rubber is injected and molded to the mold, integrating the silicone rubber 6 with the urethane film 4 so as to form the elastic sheet 26 having the presser 23.

Next, the folded portion 14 is formed in the metal sheet 5 (step S205). In the embodiment, plural portions at the periphery of the metal sheet 5 are folded toward the direction opposing to the key pad 21. This folding may performed by a consecutive process such as a process after the key top 3 is attached (step S206) or the additional decorative frame 7 is attached for example (step S207). Forming the folded portion 14 is not absolutely necessary.

Next, the key top 3 is attached to a part of the elastic sheet 26 protruding from the hole 12 (step S206). As shown in Fig.10 (E), in the embodiment, on the side of opposing to the presser 23, silicone rubber 6 whose penetrating hole 28 is penetrated through the surface, is attached with the adhesive layer to the key top 3 added the decorative layer 24 on the front surface.

Finally, the additional decorative frame 7 is attached to the silicone rubber 6 (step S207). As shown in Fig.10 (F), in the embodiment, the additional decorative frame 7, which has been added decoration in advance, is attached to the outside of the region that the key top 3 is placed in the key pad 21 with a double-faced tape. A method of manufacturing the printed layer 8 is not specifically limited.

### [Third Embodiment]

Next, a push-button switch member 30 regarding a third embodiment of the present invention will be explained.

Fig.11 is a plane view of a push-button switch member 30 regarding a third embodiment of the present invention. Fig.12 is an enlarged view of a cross sectional view along a D-D line of the push-button switch member 30 shown in Fig.11.

In the third embodiment, as shown in Figs.11 and 12, a key pad 31 mainly comprises the metal sheet 5 including the hole 12, an elastic sheet 36 and an electroluminescent sheet 25 (EL sheet 25) as an example of a light emitting element. The EL sheet 25 is attached to the face of the silicone rubber 6 of the elastic sheet 36. The EL sheet 25 is placed between the presser 15 composed of the silicone rubber 6 and a metal dome 38, and configured to be along the shape of the metal dome 38. Therefore, the push-button switch member 30 with light emitting enable to reduce the thickness, as well as to improve further visibility of the key top 3 in the dark. A partitioning bridge 35 is formed by inserting the elastic sheet 36 into a space between key top regions adjacently located each other along Y-axial direction of the key pad 31. The elastic sheet 36 is the integration of the urethane film 4 with the silicone rubber 6. Therefore, the push-button switch member 30 with light emitting is able to emit light through the partitioning bridge 35, and also, the ability of designing and operability is improved by the partitioning bridge 35.

The key top 3 is preferably a member made of polycarbonate resin. The decorative layer 37 is formed on the surface of the key top 3 after a light shield is coated. And the decorative layer 37 is added patterns such as character eliminated inside of it by laser irradiation, or the like. Shielding and coating a region except a pattern in a part of the key top 3 can make light illuminate only the part of such a pattern.

### [Fourth Embodiment]

Next, a push-button switch member 40 regarding a fourth embodiment of the present invention will be explained.

Fig. 13 is a cross sectional view along a line similar to the D-D line shown in Fig.11 regarding the push-button switch member 40 in the fourth embodiment of the present invention.

In the fourth embodiment, as shown in Fig.13, a key pad 41 comprises the metal sheet 5 including the hole 12, the elastic sheet 36 and a light guiding sheet 45, as being different from the third embodiment. The light guiding sheet 45 is placed between the presser 15 composed of the silicone rubber 6 and a metal dome 38 and configured to be along the metal dome 38. Under this structure, if a light emitting diode (LED) is used as a light emitting element, light from the LED 39 passes through the light guiding sheet 45, the silicone rubber 6, the urethane film 4, the key top 3 and the partitioning bridge 35 in this order. These paths of light make light uniformly illuminate patterns on the upper surface of plural key tops 3 even if a small number of LED 39 are placed.

Fig.14 is a cross sectional view along a line similar to the D-D line shown in Fig.11 regarding the push-button switch member 40 in a modification of the fourth embodiment of the present invention.

As shown in Fig.14, for example, a long -stripe light guiding sheet 55 may be placed instead of the light guiding sheet 45. Therefore, the push-button switch member 40 is obtained, which the push-button switch is able to be illuminated efficiently even with small numbers of LED sources.

### [Fifth Embodiment]

Next, processes for manufacturing the push-button switch member regarding the fifth embodiment of the present invention will be explained.

Fig.15 is a flow chart of a modification of manufacturing processes of the push-button switch member 1 regarding the first embodiment of the present invention. The method of manufacturing processes regarding the fifth embodiment is different from the method of manufacturing processes regarding the first embodiment by the following. The hole is formed in the metal sheet 5 and then the urethane sheet 4 is attached to it. Next, a liquid silicone rubber is supplied to the surface of the urethane film 4 and molded so as to form the push-button switch member 11. The method of the fifth embodiment will be explained with referring to the flow chart shown in Fig.15.

First, the hole 12 is formed in the metal sheet 5 by etching (step S301). Further, the positioning hole 13 is also preferably formed during the etching. The positioning hole 13 is to accurately place the metal sheet 5 into a mold. Next, the urethane film 4 is attached to the metal sheet 5 in which the hole 12 is formed (step S302). Similarly, in the embodiment, after a primer is applied on one of the surface of the metal sheet 5, the urethane film 4 may be attached by thermal compression, or using an adhesive which shows adhesiveness at normal temperature or by heating, to integrate the metal sheet 5 with the urethane film 4. Otherwise, a bonding method using a double- faced tape or an adhesive compound may be used.

Next, the additional decorative layer 10 is formed on the front surface of the urethane film 4 (step S 303). In the embodiment, the additional decorative layer 10 is preferably formed by screen printing with an ink such as urethane, polycarbonate, or polybutylene terephthalate on the surface of the urethane film 4. The additional decorative layer 10 is a layer to improve adhesiveness of the urethane film 4 with the silicone rubber 6 with additional decoration. Further, a penetration hole for positioning is preferably formed in the urethane film 4 after the additional decorative layer 10 is formed. The penetration hole for positioning is to receive the pin for positioning of a mold. Forming the penetration hole for positioning can certainly assure positioning of any parts in the mold when the key pad 2 is manufactured.

Next, a liquid silicone rubber with selective adhesion is coated on the surface of the additional decorative layer 10, and molded by compression molding (step S304). In the embodiment, by molding a liquid silicone rubber by compression molding method with selective adhesion, the metal sheet 5, the urethane film 4 and the silicone rubber 6 are integrated into the key pad 2. More particularly, the metal sheet 5 attached the urethane film 4 is placed in a mold including concave portions in accordance with a product configuration, with adjusting the position of the positioning hole 13 and the penetration hole for fitting to the positioning pin exactly. Then, a liquid silicone rubber with selective adhesion (For example, X-34-1725 made by Shin-Etsu Chemical Co., Ltd.) is coated on the surface of the urethane film 4, and molded by compression molding method. Preferable conditions for molding are temperature: 120degree C and molding time: three minutes. As a result, the metal sheet 5, the urethane film 4 and the silicone rubber 6 are integrated. Also, it is preferable to remove excess burrs after compression molding.

Next, the folded portion 14 is formed in the metal sheet 5 (step S305). The folded portion 14 is formed by a well- known method such as pressing and the like. Otherwise, the folded portion 14 may be formed by a consecutive step instead of the next step after step 304. For example, it may be formed by a process after the key top 3 is attached (step S306) or the additional decorative frame 7 is attached (step S 307). Forming the folded portion 14 is not absolutely necessary.

Next, the key top 3 is attached to a part of the elastic sheet 16 protruding from the hole 12 (step S306). The key top 3 including the decorative layer 9 is preferably attached to the surface of the urethane film 4 with the adhesive layer 11 in the position opposing to the presser 15.

Finally, the additional decorative frame 7 is attached to the metal sheet 5 (step S307). The additional decorative frame 7, which has been additionally decorated in advance, is preferably attached to the periphery of the key pad 2 being outside of a region of the key top 3 with a double faced tape. The additional decorative frame 7 is preferably a member made of polycarbonate resin. But, the additional decorative 7 may be made of another material except polycarbonate. For example, it may be made of ABS resin. A method of manufacturing the printed layer 8 is not specifically limited. But, forming the additional decorative frame 7 is not absolutely necessary.

### [Sixth Embodiment]

Next, a process for manufacturing the push-button switch member regarding a sixth embodiment of the present invention will be explained.

Fig.16 is a flow chart of a modification of manufacturing processes of the push-button switch member 1 regarding the first embodiment of the present invention. The manufacturing method of the sixth embodiment different from the first embodiment is the following. The hole is formed in the metal sheet 5 and then the urethane film 4 is placed on the metal sheet 5. Next, a liquid silicone rubber is coated on the surface of the urethane film 4 and then, the metal sheet 5, the urethane film 4 and the silicone rubber 6 are integrated so as to form the push-button switch member 1. The method of the sixth embodiment will be explained with referring to the flow chart shown in Fig.16.

First, the hole 12 is formed in the metal sheet 5 by etching (step S401). The positioning hole 13 is also preferably formed during the etching described in the previous embodiment. Next, the additional decorative layer 10 is formed on the front surface of the urethane film 4 (step S 402). The penetrating hole for positioning may be preferably formed in the urethane film 4 after the additional decorative layer 10 is formed. The penetration hole for positioning is to receive the positioning pin of a mold, as well as the embodiment above. Next, the urethane film 4 on which the additional decorative layer 10 is formed, is placed on the metal sheet in which the hole 12 is formed (step S 403). It is preferable that the urethane film 4 be placed after a primer is applied on one of the surface of the metal sheet 5.

Next, a liquid silicone rubber with selective adhesion (For example, X-34-1725 made by Shin-Etsu Chemical Co., Ltd.) is coated on the surface of the additional decorative layer 10, and molded with a pressure (step S404). This process is similar to the molding and pressing in the fifth embodiment. Molding a liquid silicone rubber with a pressure integrates the metal sheet 5 and the urethane film 4 with the silicone rubber 6. Here, it is preferable to remove excess burrs after molding.

Next, the folded portion 14 is formed in the metal sheet 5 (step S405). Otherwise, the folded portion 14 may be formed by a consecutive step instead of the next step after step 404. For example, the folded portion 14 may be formed by a process after the key top 3 is attached (step S406) or the additional decorative frame 7 is attached (step S 407) .

Next, the key top 3 is attached to the part of the elastic sheet 16 protruding from the hole 12 (step S406). The key top 3 including the decorative layer 9 is preferably attached to the surface of the urethane film 4 with the adhesive layer 11 in the position opposing to the presser 15.

Finally, the additional decorative frame 7 is attached to the metal sheet 5 (step S407). The additional decorative frame 7, which has been additionally decorated in advance, is preferably attached to the periphery of the key pad 2 being outside of a region of the key top 3 with a double faced tape.

### [Seventh Embodiment]

Next, a process for manufacturing the push-button switch member regarding a seventh embodiment of the present invention will be explained.

Fig.17 is a flow chart of a modification of manufacturing processes of the push-button switch member 1 regarding the first embodiment of the present invention. The manufacturing method of the seventh embodiment different from the first embodiment is the following. The hole is formed in the metal sheet 5 and then the urethane film 4 and the silicone rubber 6 are integrated and molded. Next, the elastic sheet 16 comprising the urethane film 4 and the silicone rubber 6 is attached to the metal sheet 5 so as to form the push-button switch member 1. The method of the seventh embodiment will be explained with referring to the flow chart shown in Fig.17.

First, the hole 12 is formed in the metal sheet 5 by etching (step S501). Next, the additional decorative layer 10 is formed on the front surface of the urethane film 4 (step S 502). Also, in order to form the additional decorative layer 10 on the urethane film 4, it is possible to use for insertion molding that the urethane film 4 in which the additional decorative layer 10 has already been formed. Next, the urethane film 4, in which the additional decorative layer 10 is formed, is integrated and molded with the silicone rubber 6 (step S503). More particularly, in the urethane film 4 in which the additional decorative layer 10 is formed, the penetration hole for positioning is made in advance. Then, the urethane film 4 is placed in a mold including a positioning pin and a concave portion in accordance with a product configuration, and also, the hole for positioning and are exactly placed and fitted to the positioning pin in the mold. Then, a liquid silicone rubber with selective adhesion (For example, X-34-1725 made by Shin-Etsu Chemical Co., Ltd.) is coated and molded by compression molding method on the surface of the urethane film 4. Preferable conditions for molding are temperature: 120degree C and molding time: three minutes. Because a concave portion in accordance with the hole 12 is placed in the inner bottom surface of the mold, after molding by compression molding, a convex portion is formed in accordance with each hole 12 on the elastic sheet 16 which the urethane film 4 and the silicone rubber 6 are integrated together.

Next, the metal sheet 5 in which the hole 12 is formed, is attached to the elastic sheet 16 (step S504). A double faced tape or an adhesive is used for attaching them. In particular, a double faced tape or a cyanoacrylate type adhesive is preferably used. When using an adhesive, a condensation cure type silicone adhesive or a hot melt adhesive may be used.

Next, the folded portion 14 is formed in the metal sheet 5 (step S505). Otherwise, the folded portion 14 may be formed by a consecutive step instead of the next step after step S504. For example, it may be formed by a process after the key top 3 is attached (step S506) or the additional decorative frame 7 is attached (step S 507).

Next, the key top 3 is attached to a part of the elastic sheet 16 protruding from the hole 12 (step S506). More specifically, the key top 3 with the decorative layer 9 is preferably attached to the surface of the elastic sheet with the adhesive layer 11 in the position corresponding to the presser 15.

Finally, the additional decorative frame 7 is attached to the metal sheet 5 (step S507). More specifically, the additional decorative frame 7, which has been additionally decorated in advance, is attached to the periphery of the key pad 2 being outside of a region of the key top 3 with a double faced tape.

Here, manufacturing processes regarding to the fifth to the seventh embodiments may be applied to methods of manufacturing the push-button switch member 20, 30 ,40 respectively.

The various embodiments of the push-button switch member regarding the present invention have been explained in the above. But, the push-button switch member regarding the present invention is not limited to the above embodiments, but may be modified in any other ways.

For example, by using the key pad 21 of the push-button switch member regarding the second embodiment of the present invention, the EL sheet 25 may be molded integrally in contact with the silicone rubber 6 of the elastic sheet 26 on the face each other. Then, the key top 3 may be attached to the surface of the EL sheet 25 with an adhesive.

Further, configuration, the placement and the number of key tops may be changed to various ways in manufacturing a component for push-button switch with light emitting if they are necessary. Further, the urethane film 4 may be replaced with a polycarbonate film so as to form the elastic sheets 16, 26 and 36 in the embodiments.

### [Examples]

Specific examples of the present invention will now be described. But, the present invention is not limited to these examples.

### (First Example)

First, a primer was coated to a stainless steel sheet of which thickness is 0.15 mm, then a urethane film (Esmer-URS ® made by Nihon Matai Co., Ltd.) of which thickness is 0.05 mm was attached to it with thermal compression. Next, a transparent urethane ink (RUX made by Seiko Advance Ltd.) was coated on the surface of the urethane film by screen printing and dried. Next, a part of the partitioning bridge among key- top regions of the stainless steel sheet, a part corresponding to the presser, and a part of the hole for positioning and the periphery of a product were etched. Then, a penetration hole was formed by punching a part of the urethane film which is left after etching the region of the positioning hole. Then, a liquid silicone rubber with selective adhesion (X-34-1725 made by Shin-Etsu Chemical Co., Ltd.) was coated on a printed layer of a transparent urethane ink. Then the positioning hole was adjusted and fit to the positioning pin of the mold having a concave portion in accordance with a product. Further, the silicone rubber was molded by compression molding for three minutes under the temperature of 120 degree C. Then, the folded portion at the periphery of the stainless steel sheet is formed by pressing. Then, a light shield material was coated on the surface and a key top made of a resin and punched as characters by a laser beam, is attached to a urethane film with an adhesive. Finally, a polycarbonate film on which a decorative layer has been printed in advance was attached to the periphery of the stainless steel sheet with a double faced tape so as to form a push-button switch member. The push-button switch member manufactured with low cost is thinner and shows high durability and superior in tactile feeling by clicking.

### (Second Example)

First, a primer is coated to a stainless steel sheet of which thickness is 0.15 mm, then a urethane film (Esmer-URS ® made by Nihon Matai Co., Ltd.) of which thickness is 0.05 mm was attached to it with thermal compression. Next, a transparent urethane ink (RUX made by Seiko Advance Ltd.) was coated on the surface of the urethane film by screen printing and dried. Next, a part of the partitioning bridge among key- top regions of the stainless steel sheet, a part corresponding to the presser, and a part of the hole for positioning and the periphery of a product were etched. Then, a penetration hole was formed by punching a part of the urethane film left in a part of the positioning hole. Further, the stainless steel sheet integrated with the urethane film was placed in the mold having a concave portion in accordance with a product configuration and a liquid silicone rubber (X-34-1725 made by Shin-Etsu Chemical Co., Ltd.) is supplied to the surface of a urethane ink and molded with injection- molding. Then, the folded portion at the periphery of the stainless steel sheet is folded with a press. Then, a light shield material is coated on the surface and a key top made of a resin and punched as characters by laser irradiation was attached to a urethane film with an adhesive. Finally, a polycarbonate frame in which decorative layer has been printed in advance was attached to the periphery of the stainless steel sheet with a double faced tape so as to form the push-button switch member. The push-button switch member manufactured with low cost is thinner, with high durability and superior in tactile feeling by clicking.

### [Industrial Applicability]

The present invention can be applied to an industrial field for manufacturing for push-button switch member and using the same.

## Claims

1. A push-button switch member (1; 20; 30; 40) comprising:
at least one key top (3);
a metal sheet (5) that includes a hole (12) corresponding to at least a position where the key top (3) is placed; and
an elastic sheet (16; 26; 36) that is placed on one side of the metal sheet (5) where the key top (3) is placed or the other side opposing to the one side, and that is inserted into the hole (12) and contacted with the key top (3) at the hole position, **characterized in that** the elastic sheet (16; 26; 36) has a structure in which, a urethane film (4) or a polycarbonate film, and a silicone rubber (6) are laminated toward the direction of the thickness of the metal sheet (5).

2. The push-button switch member (1; 20; 30; 40) according to claim 1,
wherein the elastic sheet (16; 26; 36) is filled into a space between the key tops (3) adjacently located each other, so that the filled part of the elastic sheet (16; 26; 36) may form a partitioning bridge (35).

3. The push-button switch member (1; 20; 30; 40) according to one of claims 1 and 2, wherein an additional decorative layer (10) is formed between the urethane film (4) and the silicone rubber (6) or between the polycarbonate film and the silicone rubber (6).

4. The push-button switch member (1; 20; 30; 40) according to any one of claims 1 to 3, wherein an additional decorative frame (7) is formed around the periphery of the key top (3) region on the metal sheet (5) or the elastic sheet (16; 26; 36).

5. The push-button switch member (1; 20; 30; 40) according to any one of claims 1 to 4, wherein a light emitting element (45; 55) is placed below the key top (3).

6. The push-button switch member (1; 20; 30; 40) according to any one of claims 1 to 5, wherein a part of the periphery of the metal sheet (5) is folded toward the direction opposing to the key top (3).

7. A method of manufacturing a push-button switch member (1; 20; 30; 40) according to claim 1 comprising the following steps:
forming a hole (12) in a position of the metal sheet (5) corresponding to at least one key top (3), and the hole (12) being penetrated through the metal sheet (5); and
inserting at least a portion of an elastic sheet (16; 26; 36) composed of the urethane film (4) and the silicone rubber (6) or composed of the polycarbonate film and the silicone rubber (6) into the hole (12); and
attaching the key top (3) to the elastic sheet (16; 26; 36) in the position of the hole (12).

8. A method of manufacturing a push-button switch member (1; 20; 30; 40) according to claim 7 further comprising the steps of:
attaching a urethane film (4) or a polycarbonate film to a metal sheet (5) before forming the hole (12) in the metal sheet (5), and
molding a silicone rubber (6) on the side where the urethane film (4) or the polycarbonate film is attached and inserting the elastic sheet (16; 26; 36) composed of the urethane film (4) and the silicone rubber (6) or composed of the polycarbonate film and the silicone rubber (6) into the hole (12).

9. A method of manufacturing a push-button switch member (1; 20; 30; 40) according to claim 7 further comprising:
placing a urethane film (4) or a polycarbonate film on the surface of the metal sheet (5) after forming the hole (12) in the metal sheet (5), and;
supplying liquid silicone rubber (6) to the surface of the urethane film (4) or to the surface of the polycarbonate film;
molding a structure where the metal sheet (5), the urethane film (4) and the liquid silicone rubber (6) or the polycarbonate film and the liquid silicone rubber (6) are laminated in this order and inserting an elastic sheet (16; 26; 36) composed of the urethane film (4) and the silicone rubber (6) or composed of the polycarbonate film and the silicone rubber (6) into the hole (12) of the metal sheet (5).

10. A method of manufacturing a push-button switch member (1; 20; 30; 40) according to claim 7 further comprising:
supplying liquid silicone rubber (6) to the surface of the urethane film (4) or to the surface of the polycarbonate film;
forming an elastic sheet (16; 26; 36) by molding the liquid silicone rubber (6) on the surface of the urethane film (4) or on the surface of the polycarbonate film and laminating the liquid silicone rubber (6) and the urethane film (4) or laminating the liquid silicone rubber (6) and the polycarbonate film, the elastic sheet (16; 26; 36) including a convex portion in the position corresponding to the hole (12);
attaching the elastic sheet (16; 26; 36) to the metal sheet (5) as well as fitting the convex portion into the hole (12) of the metal sheet (5).

## Patentansprüche

1. Ein Druckschalter-Bauteil (1; 20; 30; 40), welches folgendes aufweist:
zumindest ein Tastenoberteil (3);
eine Metallplatte (5), welche eine Öffnung (12) aufweist, die zumindest mit einer Position korrespondiert, an der das Tastenoberteil (3) angeordnet ist; und
eine elastische Platte (16; 26; 36), welche sich auf der Seite der Metallplatte (5) befindet, an der sich das Tastenoberteil (3) befindet oder auf der dieser Seite gegenüberliegenden Seite, und welche in die Öffnung (12) eingesetzt und mit dem Tastenoberteil (3) an der Stelle der Öffnung in Kontakt ist, **dadurch gekennzeichnet, dass** die elastische Platte (16; 26; 36) eine Struktur aufweist, in welcher eine Urethan-Folie (4) oder eine Polycarbonat-Folie und ein Silikonkautschuk (6) in die Richtung der Dicke der Metallplatte (5) laminiert sind.

2. Das Druckschalter-Bauteil (1; 20; 30; 40) nach Anspruch 1, wobei die elastische Platte (16; 26; 36) in einen Raum zwischen den aneinander angrenzend angeordnetenTastenoberteilen (3) eingefüllt ist, so dass der ausgefüllte Raum der elastischen Platte (16; 26; 36) eine Trennbrücke (35) bilden kann.

3. Das Druckschalter-Bauteil (1; 20; 30; 40) nach Anspruch 1 oder 2, wobei eine zusätzliche dekorative Schicht (10) zwischen der Urethan-Folie (4) und dem Silikonkautschuk (6) oder zwischen der Polycarbonat-Folie und dem Silikonkautschuk (6) ausgebildet ist.

4. Das Druckschalter-Bauteil (1; 20; 30; 40) nach einem der Ansprüche 1 bis 3, wobei ein zusätzlicher dekorativer Rahmen (7) rund um die Peripherie der Tastenoberteilregion (3) auf der Metallplatte (5) oder der elastischen Platte (16; 26; 36) ausgebildet ist.

5. Das Druckschalter-Bauteil (1; 20; 30; 40) nach einem der Ansprüche 1 bis 4, wobei ein lichtemittierendes Element (45; 55) sich unterhalb des Tastenoberteils (3) befindet.

6. Das Druckschalter-Bauteil (1; 20; 30; 40) nach einem der Ansprüche 1 bis 5, wobei ein Teil der Peripherie der Metallplatte (5) in die dem Tastenoberteil (3) entgegengerichtete Richtung gefaltet ist.

7. Ein Verfahren zur Herstellung eines Druckschalter-Bauteils (1; 20; 30; 40) nach Anspruch 1, welches zumindest die folgenden Schritte aufweist:
Ausbilden einer Öffnung (12) an einer Stelle der Metallplatte (5), welche zumindest mit einem Tastenoberteil (3) korrespondiert, wobei die Öffnung (12) durch die Metallplatte (5) durchdrungen ist; und
Einführen von zumindest einem Teil einer elastischen Platte (16; 26; 36) bestehend aus der Urethan-Folie (4) und dem Silikonkautschuk (6) oder bestehend aus der Polycarbonat-Folie und dem Silikonkautschuk (6) in die Öffnung (12) ; und
Befestigen des Tastenoberteils (3) an der elastischen Platte (16; 26; 36) an der Stelle der Öffnung (12).

8. Das Verfahren zur Herstellung eines Druckschalter-Bauteils (1; 20; 30; 40) nach Anspruch 7, das ferner die folgenden Schritte aufweist:
Befestigen einer Urethan-Folie (4) oder einer Polycarbonat-Folie an einer Metallplatte (5) vor Ausbildung der Öffnung (12) in der Metallplatte (5), und
Formen eines Silikonkautschuks (6) an der Seite, auf welcher die Urethan-Folie (4) oder die Polycarbonat-Folie befestigt ist, und Einführen der elastischen Platte (16; 26; 36) bestehend aus der Urethan-Folie (4) und dem Silikonkautschuk (6) oder bestehend aus der Polycarbonat-Folie und dem Silikonkautschuk (6) in die Öffnung (12).

9. Das Verfahren zur Herstellung eines Druckschalter-Bauteils (1; 20; 30; 40) nach Anspruch 7 ferner aufweisend:
Platzieren der Urethan-Folie (4) oder der Polycarbonat-Folie auf der Fläche der Metallplatte (5) nach Ausbildung der Öffnung (12) in der Metallplatte (5); und
Zufügen eines flüssigen Silikonkautschuks (6) zu der Oberfläche der Urethan-Folie (4) oder zu der Oberfläche der Polycarbonat-Folle ;
Formen einer Struktur, wobei die Metallplatte (5), die Urethan-Folie (4) und der flüssige Silikonkautschuk (6) oder die Polycarbonat-Folie und der flüssige Silikonkautschuk (6) in dieser Reihenfolge laminiert sind und Einführen einer elastischen Platte (16; 26; 36) bestehend aus der Urethan-Folie (4) und dem Silikonkautschuk (6) oder bestehend aus der Polycarbonat-Folie und dem Silikonkautschuk (6) in die Öffnung (12) der Metallplatte (5).

10. Das Verfahren zur Herstellung eines Druckschalter-Bauteils (1; 20; 30; 40) nach Anspruch 7, ferner aufweisend:
Zufügen eines flüssigen Silikonkautschuks (6) zu der Oberfläche der Urethan-Folie (4) oder zu der Oberfläche der Polycarbonat-Folie;
Ausbilden einer elastischen Platte (16; 26; 36) durch Formung des flüssigen Silikonkautschuks (6) an der Oberfläche der Urethan-Folie (4) oder an der Oberfläche der Polycarbonat-Folie und Laminieren des flüssigen Silikonkautschuks (6) und der Urethan-Folie (4) oder Laminieren des flüssigen Silikonkautschuks (6) und der Polycarbonat-Folie, wobei die elastische Platte (16; 26; 36) einen konvexen Teilbereich aufweist, der mit der Stelle der Öffnung (12) korrespondiert;
Befestigen der elastischen Platte (16; 26; 36) an der Metallplatte (5) und Einsetzen des konvexen Teilbereichs in die Öffnung (12) der Metallplatte (5).

## Revendications

1. Un membre pour un interrupteur à bouton-poussoir (1; 20; 30; 40) comprenant:
au moins une partie supérieure de touche (3);
une feuille métallique (5) qui possède une ouverture (12) coïncidant tout au moins avec l'emplacement où se situe une partie supérieure de touche (3); et
une feuille élastique (16; 26; 36) qui se situe sur l'une des faces de la feuille métallique (5) où est située la partie supérieure de touche (3) ou bien qui se situe sur la face opposée à celle-ci, qui est insérée dans l'ouverture (12) et qui est en contact avec la partie supérieure de touche (3) à l'emplacement de l'ouverture, **caractérisé en ce que** la feuille élastique (16; 26; 36) possède une structure dans laquelle, un film en uréthane (4) ou un film en polycarbonate, ainsi qu'un caoutchouc de silicone (6) sont laminés dans la direction de l'épaisseur de la feuille métallique (5).

2. Le membre pour un interrupteur à bouton-poussoir (1; 20; 30; 40) selon la revendication 1, où la feuille élastique (16; 26; 36) remplit l'espace compris entre les parties supérieures de touche (3) adjacentes les unes aux autres, de façon à ce que cette partie de la feuille élastique (16; 26; 36) puisse former un pont de cloisonnement (35).

3. Le membre pour un interrupteur à bouton-poussoir (1; 20; 30; 40) selon l'une des revendications 1 ou 2, où une feuille décorative supplémentaire (10) est formée entre le film en uréthane (4) et le caoutchouc de silicone (6) ou bien entre le film en polycarbonate et le caoutchouc de silicone (6).

4. Le membre pour un interrupteur à bouton-poussoir (1; 20; 30; 40) selon l'unes quelconques des revendications 1 à 3, où un cadre décoratif supplémentaire (7) est formé sur la feuille métallique (5) ou sur la feuille élastique (16; 26; 36) autour de la région périphérique de la partie supérieure de touche (3).

5. Le membre pour un interrupteur à bouton-poussoir (1; 20; 30; 40) selon l'unes quelconques des revendications 1 à 4, où un élement émettant de la lumière (45; 55) se situe en dessous de la partie supérieure de touche (3).

6. Le membre pour un interrupteur à bouton-poussoir (1; 20; 30; 40) selon l'unes quelconques des revendications 1 à 5, où une partie de la périphérie de la feuille métallique (5) est pliée dans la direction opposée à la partie supérieure de touche (3).

7. Un procédé de fabrication d'un membre pour un interrupteur à bouton-poussoir (1; 20; 30; 40) selon la revendication 1 comprenant les étapes suivantes:
formation d'une ouverture (12) à un emplacement de la feuille métallique (5) coïncidant tout au moins avec une partie supérieure de touche (3) de façon à ce que l'ouverture (12) soit traversée par la feuille métallique (5); et
insertion d'au moins une portion d'une feuille élastique (16; 26; 36) composée du film en uréthane (4) et du caoutchouc de silicone (6) ou bien composée du film en polycarbonate et du caoutchouc de silicone (6) au travers de l'ouverture (12) ; et
attachement de la partie supérieure de touche (3) à la feuille élastique (16; 26; 36) à l'emplacement de l'ouverture (12).

8. Un procédé de fabrication d' un membre pour un interrupteur à bouton-poussoir (1; 20; 30; 40) selon la revendication 7 comprenant en outre les étapes consistant à:
attacher un film en uréthane (4) ou un film en polycarbonate à la feuille métallique (5) avant de former l'ouverture (12) dans la feuille métallique (5), et à
mouler un caoutchouc de silicone (6) sur la surface où le film en uréthane (4) ou bien le film en polycarbonate est attaché et insérer la feuille élastique (16; 26; 36) composée du film en uréthane (4) et du caoutchouc de silicone (6) ou bien composée du film en polycarbonate et du caoutchouc de silicone (6) au travers de l'ouverture (12).

9. Un procédé de fabrication d'un membre pour un interrupteur à bouton-poussoir (1; 20; 30; 40) selon la revendication 7 comprenant en outre:
placement d'un film en uréthane (4) ou d'un film en polycarbonate sur la surface de la feuille métallique (5) après formation de l'ouverture (12) dans la feuille métallique (5), et
application du caoutchouc de silicone liquide (6) sur la surface du film en uréthane (4) ou sur la surface du film en polycarbonate ;
moulage d'une structure où la feuille métallique (5), le film en uréthane (4) et le caoutchouc de silicone liquide (6) ou bien le film en polycarbonate et le caoutchouc de silicone liquide (6) sont laminés dans cet ordre et insertion d'une feuille élastique (16; 26; 36) composée du film en uréthane (4) et du caoutchouc de silicone (6) ou bien composée du film en polycarbonate et du caoutchouc de silicone (6) au travers de l'ouverture (12) de la feuille métallique (5).

10. Un procédé de fabrication d'un membre pour un interrupteur à bouton-poussoir (1; 20; 30; 40) selon la revendication 7 comprenant en outre:
application du caoutchouc de silicone liquide (6) sur la surface du film en uréthane (4) ou sur la surface du film en polycarbonate;
formation d' une feuille élastique (16; 26; 36) en moulant le caoutchouc de silicone liquide (6) sur la surface du film en uréthane (4) ou sur la surface du film en polycarbonate et lamination du caoutchouc de silicone liquide (6) et du film en uréthane (4) ou bien lamination du caoutchouc de silicone liquide (6) et du film en polycarbonate ; la feuille élastique (16; 26; 36) comprenant une portion convexe à l'emplacement correspondant à l'ouverture (12);
attachement de la feuille élastique (16; 26; 36) à la feuille métallique (5) ainsi que mise en place de la portion convexe au travers de l'ouverture (12) de la feuille métallique (5).
